Europäisches Patentamt

European Patent Office

Office européen des brevets

(11) Publication number: **0 418 008 A1**

# EUROPEAN PATENT APPLICATION

(21) Application number: 90309865.5

(51) Int. Cl.5: **F16L 55/17**

(22) Date of filing: **10.09.90**

(30) Priority: **11.09.89 US 405363**

(43) Date of publication of application:
**20.03.91 Bulletin 91/12**

(84) Designated Contracting States:
**AT BE CH DE DK ES FR GB GR IT LI LU NL SE**

(71) Applicant: **GRIPPER INC.**
**1107 Aldine Mail Route**
**Houston, Texas 77039(US)**

(72) Inventor: **Reneau, Bobby J.**
**Route 2, Box 133**
**Oakwood, Texas 75855(US)**

(74) Representative: **Allman, Peter John et al**
**MARKS & CLERK Suite 301 Sunlight House**
**Quay Street**
**Manchester M3 3JY(GB)**

(54) Pipe clamp.

(57) A pipe jacket (10) placed around a leaking pipe comprising a pair of semi-annular housing members (14,16) having sealing elements around their periphery for sealingly encasing the leaking pipe. Each semi-annular housing has two longitudinal splines with tapered side walls. A channel lock bar (90), having correspondingly tapered inner sides, is attached to the splines by biasing means, such as threaded studs extending through the channel lock bar and into the splines. A nut is threaded onto the studs to secure the pipe jacket around the leaking pipe.

EP 0 418 008 A1

## PIPE CLAMP

### BACKGROUND OF THE INVENTION

The field of this invention relates to pipe jackets or clamps disposed around a tubular member having fluid flow therethrough and, more particularly, to clamps or jackets for repairing a leaking or damaged pipeline.

More and more pipelines are being used to carry oil or gas from offshore oil and gas well drilling and production locations to facilities located either offshore or on a nearby land mass. Typically, these underwater pipelines are comprised of sections of pipe which are interconnected by welding and rest underwater on the river bottom or ocean floor, often in limited access areas or environments. From time to time, such pipelines become damaged or leak due to corrosion, weld failure, or damage due to ship anchors.

In repairing pipelines located in limited access areas, it is necessary to seal off the damaged or leaking portion of the pipeline or remove the damaged portion or replace that portion of the pipeline with a new pipe. Such repair may include underwater welding, which is an extremely time-consuming and technically difficult task. Further, oftentimes, the pipeline is large and bulky making it difficult to handle. Also, difficulties are encountered where such pipelines are located at great underwater depths.

The repair of damaged subsea pipes requires a sequence of coordinated operations. A diver, submarine robot, or combination thereof, may be employed to direct a repair coupling or clamp to the point of damage or leakage and repair the pipe by properly affixing the coupling or clamp around the damaged or leaking pipe. Further, the repair couplings and clamps must be maneuverable under water with a minimum of connections and mechanical parts which must be implemented during installation. In some instances, large pipeline clamps may weigh over one ton making them difficult to maneuver under water and align for connection around the damaged or leaking pipe.

Numerous types of hydraulically actuated pipe couplings for connecting two pipe ends are shown in U. S. Patents 3,393,926; 3,704,033; 3,707,025; 3,830,526; and 4,330,143. Other types of couplings rely upon mechanical action such as U. S. Patents 4,109,945 and 4,138,147.

As distinguished from couplings, pipeline repair clamps or jackets surround the damaged or leaking portion of the pipeline so as to seal off the leakage. Typically, such clamps for underwater pipelines are comprised of two halves with means for securely connecting the halves around the damaged portion of the pipeline. The clamp includes a cylindrical bore which is sized to fit around the pipeline and is of sufficient length to traverse any crack, porosity, or other pipeline defect which is causing the leak. The basic closure within the body of the clamp is cylindrical in nature which is an efficient form for pressure retention. The jacket halves are commonly connected by bolts and nuts which pass through flanges disposed on the clamp halves. Flange section material is added to the sides of the clamp for bolting requirements. In practice, a block forging or casting is used depending upon the surface requirements and pressure rating. Other connections including a hinge and flange system whereby one edge of each half is hingedly connected, and the other side is flanged for bolt or nut and bolt connection.

U. S. Patent 1,463,749 discloses a device for preventing leaks comprising a pair of semi-cylindrical plates hinged at one end by knuckles and connected together at the other end by a sliding clamp, which pulls the two plates together, due to its trapezoidal shape.

U. S. Patent 1,510,838 discloses a pipe coupling having a pair of casing members with flanges spaced 180° apart. The flanges of each casing member meet with the corresponding flange on the other casing so that the sleeves can slide over the casing member. The sleeves secure the casing members together due to the tapered grooves therein, which cooperate with the flanges, that are also tapered.

U. S. Patent 4,535,822 discloses a conventional pipe jacket for repairing a leak in a pipe. The pipe jacket comprises a pair of sleeve segments having radially extending flanges provided with bores for receiving fasteners so as to connect the two sleeves together.

U.S. Patents 2,787,051 and 4,111,234 also disclose pipe couplings.

The internal pressure caused by the leaking pipe creates a separating force internally of the clamp tending to force the clamp halves open. This separating force may be calculated as the pressure force within the clamp multiplied times the seal area. The clamping force of the clamp on the seals must equal or exceed the separating force. Otherwise, the clamp will leak.

The majority of subsea and industrial pipe repair clamps and hot taps are fastened together by means of bolt and nut fasteners. Such fasteners must be capable of resisting the separating force exerted by the retained fluid pressure within the pipeline and sufficiently prestressed to hold the load between the internal seal surfaces to prevent a leak-causing gap in the clamp. This preload is necessary for elastomer, plastic and metal-to-metal seals to maintain adequate surface loading. Thus the clamp fasteners must sufficiently compress the seals to provide adequate sealing pressure and withstand the internal separating force. A uniform compression force must be maintained on the seals to withstand the separating force. Thus it is necessary that a uniform tension be applied to the fastener to achieve this uniform compression of the seals.

The standard ANSI flat faced flange uses preloaded bolts and nuts to maintain a uniform closure seal force adequate to resist the pipeline fluid pressure. The bolts are uniformly preloaded or torqued to maintain a consistent surface engagement pressure and adequate fastener preload. A uniform load or torque must be applied to every bolt or stud. Usually several passes are required at tightening the bolts or studs to obtain an adequate fastener and seal surface preload.

Maintaining adequate closure force with bolting requires a clamp body sufficiently large to provide an adequate nut surface support area. This is obtained by parallel flanges extending on each side of the body and running parallel with the pipe bore. Such extensions of the clamp body adds approximately 30% to the overall weight and size of the clamp.

The present invention overcomes the deficiencies of the prior art.

## SUMMARY OF THE INVENTION

The present invention is directed to a pipe jacket seal and clamp, which is placed around the leak in a pipe so as to seal the damaged pipe. The pipe clamp comprises a pair of semi-annular housing members having sealing elements around their periphery for sealingly encasing the damaged pipe. Each semi-annular housing has two longitudinal splines spaced 180° apart. The splines have their side walls tapered, so that when a channel lock bar, which has a channel with correspondingly tapered inner side ramps, is attached to the splines, the semi-annular housing members are pulled together. The channel lock bars are secured to the splines by threaded studs extending from each spline and through its respective channel lock bar so that a nut may be screwed down to secure the pipe clamp about the damaged pipe. Alternatively, bolts can be used extending through the channel locking bars into threaded holes in the splines.

The present invention has several advantages over the prior art. The deployment of the inventive clamp requires less labor and time than prior art clamps. Further, the channel lock bar achieves a uniform closing force for clamp closure. The bolts are reduced in size and number as compared to prior art clamps. Also, the weight of the inventive clamp is substantially reduced over that of prior art clamps. The structure of the clamp body of the present invention using the lock channel bar is more efficient than the prior art bolted flange closure. The above advantages permit the present invention to achieve cost reduction and overall clamp efficiency.

Other objects and advantages of the present invention will become apparent from the following description.

## BRIEF DESCRIPTION OF THE DRAWINGS

For a detailed description of the preferred embodiment of the invention, reference will now be made to the accompanying drawings wherein:

Figure 1 is a prospective view of the clamp of the present invention;

Figure 2 is a side view, partially in cross section, of the clamp of Figure 1;

Figure 3 is an end view, partially in cross section, of the clamp of Figure 1 upon initial engagement for assembly;

Figure 4 is a fragmentary view of the channel lock shown in Figure 3;

Figure 4A is a fragmentary view of the channel lock of Figure 4 illustrating an alternative location for the fastener;

Figure 5 is an end view, partially in cross section, of the clamp of Figure 1 upon complete assembly;

Figure 6 is a dimensional view of Figure 4; and

Figure 7 is a prospective view of an alternative embodiment of the clamp of the present invention.

## DESCRIPTION OF THE PREFERRED EMBODIMENT

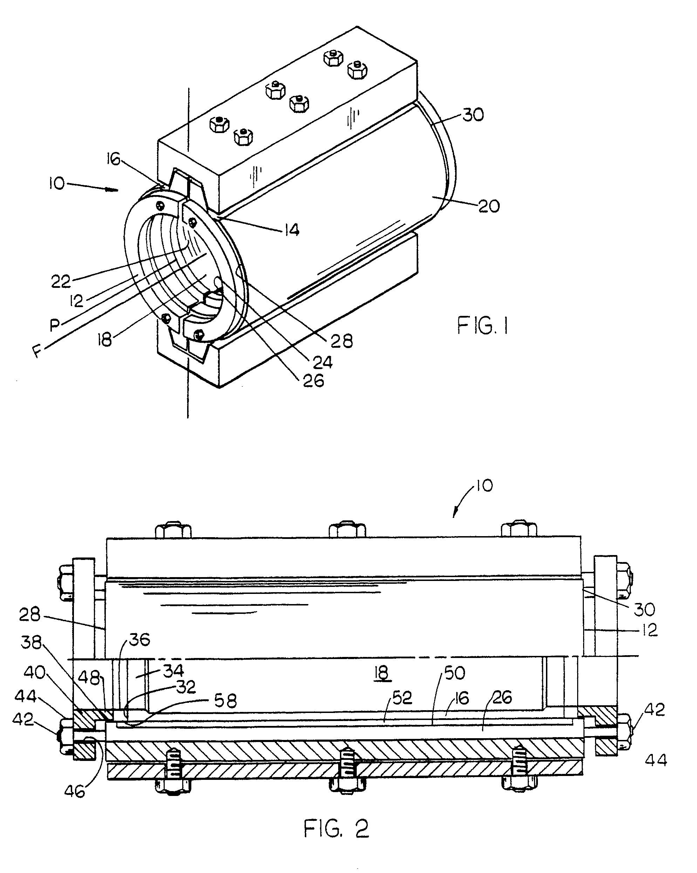

Referring initially to Figures 1-3, the pipe jacket or channel lock clamp 10 of the present invention includes a generally cylindrical or tubular body 12 made of two semi-cylindrical or semi-annular housing members 14, 16. Housing members 14, 16 form a cylindrical central bore 18 having a diameter sized for receiving a damaged section of a pipeline.

The body 12 of channel lock clamp 10 may be made from a steel block, tubular steel, by extrusion, or by casting or forging. It is preferable that the material of the clamp 10 be substantially the same as the material of the pipe to be repaired. The clamp 10 of the present invention may be made by extrusion since no clearance is required around the nuts for the bolts or studs which would otherwise prevent a wrench from engaging the nut in conventional clamps. The inscribed circle for the nut clearance of prior art clamps is too large to permit extrusion.

The weight of the clamp affects the ease of installation and also cost. The body 12 of clamp 10 is constructed as light as possible and yet heavy enough so as not to distort under load. The body of a 36" prior art clamp weighs approximately 12,000 pounds while that of the present invention weighs only approximately 8,000 pounds. Thus, the present invention reduces the weight of prior art clamps by 20 to 25%. Prior art clamps must be heavier to get the same metal-to-metal contact between clamp halves as the present invention.

Each semi-annular housing member 14, 16 includes a generally outer arcuate wall 20 and an inner arcuate wall 22 forming central bore 18. Outer and inner walls 20, 22 terminate along elongated lateral faces 24, 26 and at end faces 28, 30. Upon assembly, lateral faces 24, 26 mate along a plane "P" which intersects with the flow axis "F" of central bore 18.

Referring particularly to Figure 2, a counterbore 32 is formed within central bore 18 adjacent each of the end faces 28, 30 by a reduced diameter portion 34 which projects radially inwardly into central bore 18. An annular seal 36, having a rectangular cross section, is disposed within counterbore 32 and has a height which is less than the depth of counterbore 32 thereby providing an annular entry space 38 adjacent each end face 28, 30 for receiving an annular packing flange 40. Annular packing flange 40 is mounted on each end face 28, 30 by studs or bolts 42 and nuts 44. Flange 40 includes apertures 46 for receiving bolts 42. Flange 40 includes an annular packing ring 48 having an outer diameter slightly smaller than the inner diameter of annular entry space 38 of counterbore 32 whereby upon the tightening of bolts and nuts 42, 44, packing ring 48 is received with space 38 and engages and compresses annular seal ring 36 to provide an end seal for each end face 28, 30 of clamp 10 which sealingly engages the exterior of the leaking pipe.

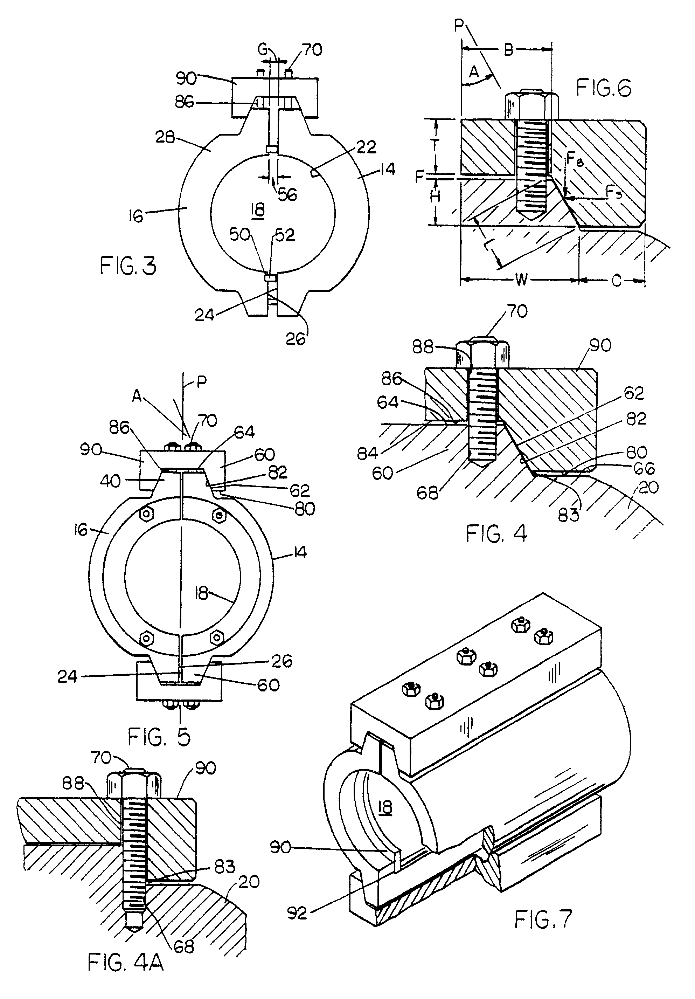

Referring now to Figures 2 and 3, elongated lateral face 26 of housing member 16 includes an elongated recess or groove 50 adjacent inner face 22 for mounting an elongated rectangular sealing element 52 therein. The recess or groove 50 has sufficient length to overlap counterbore 32 at each end face 28, 30 such that sealing element 52 sealingly engages annular seals 36. The rectangular cross section of sealing element 52 is larger than the cross section of seal groove 50 thereby creating an elongated lateral projecting portion or standoff 56. The standoff 56 may extend between .010 and .015 inches from lateral face 26. Upon mating housing members 14, 16, the standoff 56 engages sealing face 24 of housing member 14 preventing the mating engagement of faces 24, 26 and creating a gap G. The gap G is sized so as not to be so large as to prevent the channel 86 of lock bar 90 from receiving splines 60 as hereinafter described.

Upon assembly of the clamp 10 around a leaking pipe, elongated sealing element 52 mounted in groove 50 of lateral face 26, sealingly engages the opposite lateral face 24 of housing member 14. End seals 36 are then compressed to sealingly engage around the damaged pipe and also engage the terminal ends of elongated lateral sealing element 52 at 58. Thus, lateral sealing element 52 and annular seals 36, mounted around the periphery of housing members 14, 16, completely seal around the leaking portion of the pipe.

Upon sealing engagement, fluid from the pipe leaks into the jacket formed by clamp 10 around the pipe and the internal fluid pressure within central bore 18 builds due to the fluid pressure within the pipeline. This internal fluid pressure applies a separating force to the clamp 10 tending to cause clamp housing members 14, 16 to separate. Should the separation force overcome the sealing force, leaks will occur between clamp 10 and the leaking pipe if the separating force is sufficient to cause an extrusion gap between lateral faces 24, 26 or if the gap increases sufficiently to reduce seal compression load. The separating force is calculated by determining the internal fluid pressure of the pipeline and multiplying that force times the sealing area of seals 36 and 52. Thus, it is important that the preloading and compression of seals 36, 52 be great enough to maintain a sealing load which will be maintained upon the application of the separating force to clamp 10. Generally, the rubber load on seals 36, 52 is designed to be twice the anticipated internal separating force within the clamp 10.

Referring now to Figure 4, housing members 14, 16 each further include a pair of elongated longitudinal ears or splines 60 contiguous with and forming a part of elongated faces 24, 26. Each spline 60 includes a tapered side ramp 62 extending the length of spline 60 from a flat top surface 64 to a parallel flat side surface 66. In the preferred embodiment, splines 60 include a plurality of threaded holes 68 adapted for receiving studs 70 as hereinafter described. The side ramp 62 forms a wedge angle "A" with the plane P of lateral faces 24, 26.

Referring now to Figures 3 and 4, the clamp 10 further includes a channel lock bar 90 having a generally rectangular cross section with a longitudinal channel 86 having a channel bottom 84, side ramps 82, and end walls 80. Side ramps 62 and 82 form a ramp or wedge having angle A with plane P such that side ramps 82 will slidingly interact with side ramps 62 of splines 60. Channel lock bar 90 further includes apertures 88 for receiving studs 70 aligned with bores 68 of splines 60 for attaching bar 90 to splines 60. It can be appreciated that other means may be used as closing components such as hydraulic cylinders, cam actuation and ratchets.

Studs 70 are preferably located in threaded holes 68 between lateral spline faces 24, 26 and side ramps 62, 82. Figure 4A illustrates an alternative location of studs 70 through side ramps 62, 82. Bolts or studs located on the other side of outside edge 83 of the side ramps 62, 82, such as passing through end walls 80 and side flats 66, apply a bending moment to housing members 14, 16 and tend to pull members 14, 16 apart upon tightening causing the clamp to open and leak. Bolts or studs 70 located inside ramps 62 provide an inside bending moment so as to increase the contact between housing members 14, 16 and apply a positive sealing force to elongated sealing element 52.

Referring now to Figure 6, wedge angle A determines the amount of bolt load "$F_B$" required for side ramps 62, 82 to apply a sufficient load or clamping force "$F_s$" on elongated sealing elements 52. Studs 70 apply a downward force $F_B$ on side ramps 62, 82 determined by wedge angle A such that the ramps 62, 82, together with the studs 70, supply the required clamping force $F_s$ to close the clamp and apply sealing preload. This clamping force is required to maintain the load on seals 52 for maintaining sealing engagement as well as to fasten the clamp together. As indicated previously, the clamping force often is designed to be approximately twice the separation force. The wedge angle A of the present invention also provides a uniform compression force along the length of splines 60 to uniformly compress seals 52.

The present invention utilizes the mechanical advantage of the wedge angle rather than merely relying on the closing force of the prior art studs or bolts. The wedge angle A provides 3 to 5 times the normal mechanical advantage of prior art bolts. A 10° wedge angle A provides 5 times (the sine of 10°) the mechanical advantage. A 20° wedge angle A provides 2.9 times (the sine of 20°) the mechanical advantage. The cosine of 20° permits the use of a bolt 1/5 the size of conventional bolts.

Wedge angle A must be an angle with a size between a minimum angle causing a self-locking taper and a maximum angle allowing a reasonable gap G for the opening of the clamp and the mounting of channel lock bar 90. As shown in Figure 3, the gap G between housing members 14, 16 must be small enough to accommodate the insertion of splines 60 into the channel 86 of channel lock bar 90. Although a larger wedge angle A permits a larger gap G between housing members 14, 16 for the assembly of channel lock bar 90, it is preferred to have the smallest wedge angle possible. If the wedge angle A becomes too small, however, the friction area causes the taper between ramps 62, 82 to become self-locking and locks the clamp up. Thus, a locking taper must be avoided.

The wedge angle A dictates the size of studs 70 and the standoff 56 of sealing element 52. One is exchanged for the other. A smaller wedge angle requires less bolt force $F_B$. The studs 70, however, must be a minimum size so that they will not bend. Larger clamps will use larger studs. The wider the gap G between housing members 14, 16 upon assembly, the larger studs 70 that are required.

There is an optimization of the length "L" of wedge angle A, given a particular wedge angle A, such as approximately 10°. It is only desirable to have the mating splines 60 travel a sufficient distance within channel 86 to achieve an adequate surface area contact between ramps 62, 82 and avoid the yield of the metal of the spline 60 and yet hold the separation force. The channel lock bar 90 must not become deformed under the bearing load placed on the metal. The channel lock bar 90 must also be long enough to carry that load and yet have sufficient contact area between ramps 62, 82 of the splines 60 such that the metal will not yield.

The separating force "F" and the yield stress "Y" of the metal for the clamp body 12 determine the dimensions for splines 60, channel lock bar 90 and studs 70. The wedge angle A for side ramps 62 and 82, together with studs 70, must provide a clamping force which will withstand the separating force caused by the retained fluid pressure. The load of the separating force must be retained through the length "L" of the direct contact between side ramps 62 and 82. The mating engagement of side ramps 62 and 82 allows a uniform load distribution throughout the length L of splines 60. The studs 70, used to retain the channel lock bar 90 in its retaining position, are required to hold one component of the separation force F. Thus, the wedge angle A between side ramps 62, 82 reduces the size and number of studs 70 by withstanding a component of the separation force F.

The area of side ramp 62 determines the height "H" of side ramp 62. The height H is held to a minimum to reduce cross-section binding in the channel lock bar 90 and splines 60. To determine the side ramp height H, minimizing the bending in the lock channel bar 90 and splines 60, the side ramp 62 is loaded to near yield permitting height H to be as small as possible. A formula for determining the side ramp height H = F/(L • Y).

The width "W" of spline 60 must be sufficient to resist the shear caused by the separating force F. Therefore the width W is sized to keep the direct shear below the shear yield point. The shear yield point equals 57% of the tensile yield. Thus, the width W = H/.57.

The wedge angle A is selected to keep the closing component force and studs 70 small and yet allow a sufficient seal gap G to permit the channel lock bar 90 to receive the mating splines 60. The size of the seal gap G = H • Tan A. The separating force F equals $F_s$ Tan A. Thus, the flat surface 64 = Y -H Tan A. The width of upper surface 64 is labelled "B" and the width of side surface 66 is labelled "C". The thickness T of channel lock bar 90 must be sufficient to bring the inner surface 86 to the yield point at design load. The moment arm MA equals [(H + T)/2] + F. The moment per inch for lock channel bar 90 = (MA • $F_s$ + Y $F_s$ Tan A - HFB)/L. Let the bolt force balance the vertical component of the separating force, i.e. $F_B$ = $F_s$ Tan A such that by algebraic substitution the moment M = (MA $F_s$ - (H-G) $F_s$ Tan A)/L. Simplified, M = $F_s$/L [MA-(H-W) Tan A]. Therefore the bending stress B = 6M/T = 6$F_s$/LT [MA-(H-W) Tan A].

For a 6" 900 pound clamp at 10" between seals, the present invention would require three 1" bolts. A 36" clamp will have a wedge angle of approximately 20° and a bolt size of 1-5/8".

The channel lock clamp 10 of the present invention incorporates a number of unique features that eliminate the requirement for large bolts and nuts, insures uniform clamping action, reduces overall clamp size and weight, facilitates assembly, and shortens installation time. Overall, the components of the clamp 10 are lighter and easier to handle enabling the assembly procedure to require less effort. The unique channel bar arrangement provides a uniform clamping load along the complete length of the body. Seal surfaces are uniformly preloaded by the force exerted through the cam angles of the channel bars and splines. The channel bars and splines achieve a uniform preload using the mechanical advantage of the wedge angle making up the channel bar and splines. As a result of this mechanical advantage, bolting or other fastener means are reduced in magnitude and size.

The end closure of clamp 10 establishes a seal between the pipe outside diameter and the central clamp bore 18. Depending upon the surface requirements, a number of methods may be employed to achieve such end seals. As shown in Figure 7, in low pressure clamps, split seals 94 may be circumferentially deployed in grooves 92 within the central clamp bore 18. Sealing engagements with the pipe outside diameter is achieved by closing the clamp 10 around the pipe causing an initial compression and loading the seal 94 against pipe outside diameter. There is sufficient precompression to form a closed seal barrier that resists annular pressure in the clamp cavity. A higher pressure or enhanced reliability requires the packing flange arrangement disclosed in the preferred embodiment.

While a preferred embodiment of the invention has been shown and described, modifications thereof can be made by one skilled in the art without departing from the spirit of the invention.

## Claims

1. A pipe jacket for mounting over a pipeline, comprising:
a housing having a first and second housing member forming a central bore for receiving the pipeline;
sealing means disposed around the periphery of said housing members for sealing around the pipeline;
said first and second housing members having mating splines;
a locking member having a channel therein for receiving said mating splines, said channel and splines having mating sides at an angle with said mating splines; and
fasteners attaching said locking member to said housing members.

2. The pipe jacket of claim 1 wherein said housing members are semi-circular with said splines extending along the lateral longitudinal lengths of said housing members.

3. The pipe jacket of claim 1 wherein said sealing means includes sealing elements disposed in lateral and arcuate grooves along the periphery of said housing members.

4. The pipe jacket of claim 3 wherein said sealing elements in said lateral and arcuate grooves overlap.

5. The pipe jacket of claim 1 wherein said sealing means projects from the periphery of said housing members.

6. The pipe jacket of claim 1 wherein said angle is between 10° and 20° measured from the axis of said fasteners.

7. The pipe jacket of claim 1 wherein said angle is greater than a self-locking taper and smaller than the angle required to allow a sufficient gap between said housing members for said locking member to receive said mating splines.

8. The pipe jacket of claim 1 wherein said fasteners are studs extending through said locking member and into said mating splines.

9. The pipe jacket of claim 8 wherein said studs are disposed between the plane of engagement of said mating splines and the outside edge of said mating sides.

10. The pipe jacket of claim 1 wherein said sealing means includes a packing flange mounted on each of the ends of said housing for compressing a sealing element between said housing and the pipeline.

11. A pipe connection for connecting adjacent pipe shells forming a conduit, comprising:

a first ear projecting from the mating edge of one pipe shell and extending the longitudinal length of the pipe shell;

a second ear projecting from the mating edge of the other pipe shall end extending the longitudinal length of the other pipe shell;

said first and second ears having a tapered side forming an angle with the plane formed by the mating edges of the pipe shells;

a clamp member having a channel extending the longitudinal length thereof, said channel being formed by a pair of cam shoulders having a taper substantially corresponding to the taper of said sides, the mouth of said channel being sized to receive the leading edges of said ears;

means for biasing said ears into said channel;

said cam shoulders interacting with said tapered sides upon biasing said ears into said channel whereby the adjacent pipe shells are forced together to form a connection.

12. The pipe connection of claim 11 wherein said biasing means applies as force between the mating edges of the pipe shells and the engagement of said cam shoulders and tapered sides.

13. The pipe connection of claim 11 wherein a seal is housed in a groove in one of the pipe shells for sealingly engaging the mating edge of the other pipe shell.

14. The pipe connection of claim 13 wherein said seal projects from said groove and said mouth of said channel is greater than the extent of said projecting seal portion and the width of the leading edges of said ears.

FIG. 1

FIG. 2

FIG. 3

FIG.6

FIG. 4

FIG. 5

FIG. 4A

FIG.7

European
Patent Office

EUROPEAN SEARCH
REPORT

Application Number

EP 90 30 9865

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| D,X | US-A-4 535 822   (THE PIPELINE DEV. CO.)<br>* Column 2, lines 44-60; column 3, lines 17-57; figures 1,2,7; claims 1,2 * | 1-5 | F 16 L 55/17 |
| D,A | — — — | 11-14 | |
| A | US-A-8 705 678   (INTERNATIONAL CLAMP CO.)<br>* Column 24, lines 4-34; figures 1,2,4-6 * | 1-4,11-13 | |
| D,A | — — —<br>US-A-1 463 749   (C. POLLAK)<br>* All figures * | 1,2,11,12 | |
| | — — — — — | | |

TECHNICAL FIELDS
SEARCHED (Int. Cl.5)

F 16 L 55/17

The present search report has been drawn up for all claims

| Place of search | Date of completion of search | Examiner |
|---|---|---|
| The Hague | 28 November 90 | NEUMANN E. |

CATEGORY OF CITED DOCUMENTS

X : particularly relevant if taken alone
Y : particularly relevant if combined with another
    document of the same catagory
A : technological background
O : non-written disclosure
P : intermediate document
T : theory or principle underlying the invention

E : earlier patent document, but published on, or after
    the filing date
D : document cited in the application
L : document cited for other reasons

&: member of the same patent family, corresponding
    document